# EUROPÄISCHE PATENTSCHRIFT

(11) **EP 3 775 981 B1**
(45) Veröffentlichungstag und Bekanntmachung des Hinweises auf die Patenterteilung: **23.07.2025**
(21) Anmeldenummer: 19716348.8
(22) Anmeldetag: 03.04.2019
(51) Int. Cl.: G01S 17/10, G01S 17/42, G01S 7/486, G01S 7/481, G01S 7/487, G01S 7/4863, G01S 7/4865

(54) **VERFAHREN ZUR ANSTEUERUNG VON SENSORELEMENTEN EINES LIDAR MESSSYSTEMS**
METHOD FOR ACTUATING SENSOR ELEMENTS OF A LIDAR MEASURING SYSTEM
PROCÉDÉ DE COMMANDE D'ÉLÉMENTS DE DÉTECTION D'UN SYSTÈME DE MESURE LIDAR

(30) Priorität: 10.04.2018 DE 102018205378
(43) Veröffentlichungstag der Anmeldung: 17.02.2021
(73) Patentinhaber: MicroVision, Inc., Redmond, WA 98052 (US)
(72) Erfinder: BEUSCHEL, Ralf, 88239 Wangen (DE); KIESEL, Rainer, 89129 Stetzingen (DE)
(74) Vertreter: RGTH
(86) Internationale Anmeldenummer: PCT/EP2019/058392
(87) Internationale Veröffentlichungsnummer: WO 2019/197241

(56) Entgegenhaltungen:
- DE-A1- 102009 029 372
- US-A1- 2015 285 625
- US-A1- 2016 209 498

## Beschreibung

Die Erfindung betrifft ein Verfahren zur Ansteuerung von Sensorelementen eines LIDAR Messsystems.

In der WO 2017 081 294 ist ein LIDAR Messsystem beschrieben. Dieses ist statisch ausgebildet und umfasst eine Sendeeinheit mit einer Mehrzahl an Emitterelementen und eine Empfangseinheit mit einer Mehrzahl an Sensorelementen. Die Emitterelemente und die Sensorelementen sind in einer Focal Plane Array Konfiguration ausgebildet und in einem Brennpunkt einer jeweiligen Sendeoptik und Empfangsoptik angeordnet. Bezüglich der Empfangseinheit und der Sendeeinheit sind ein Sensorelement und ein korrespondierendes Emitterelement einem bestimmten Raumwinkel zugeordnet. Das Sensorelement ist somit einem bestimmten Emitterelement zugeordnet.

In einer vorteilhafteren Ausführungsvariante des LIDAR Messsystems ist ein Sensorelement Teil einer Makrozelle, wobei die Makrozelle mit einer Mehrzahl an Sensorelementen einem Emitterelement zugeordnet ist. Dadurch können Abbildungsfehler, die beispielsweise durch die Optikelemente oder auch durch Parallaxefehler auftreten, ausgeglichen werden. Die Vielzahl der Sensorelemente führt jedoch zu einer übermäßigen Detektion von Umgebungsstrahlung. Da zumeist nur ein Teil der Sensorelemente von einem reflektierten Laserlicht getroffen wird, ist es von Vorteil lediglich die Sensorelemente zu aktivieren, die auch von dem Laserlicht getroffen werden.

US 2015/0285625 A1 offenbart eine Vorrichtung und ein Verfahren zum Bestimmen einer Entfernung zu einem Objekt unter Verwendung eines binären, ereignisbasierten Bildsensors.

DE 10 2009 029 372 A1 betrifft eine Messvorrichtung zur Messung einer Entfernung zwischen der Messvorrichtung und einem Zielobjekt mit Hilfe optischer Messstrahlung.

US 2016/0209498 A1 beschreibt in System und ein Verfahren zur Messung einer zeitlichen Verzögerung, die ein optisches Signal entlang eines Weges hinsichtlich photonensensitiver Detektoren und mehreren optischen Pulsraten erfährt.

Es ist daher Aufgabe ein Verfahren bereitzustellen, um eine durch die Sensorelemente detektierte Umgebungsstrahlung auf einem möglichst niedrigen Niveau zu halten.

Diese Aufgabe wird gelöst durch das Verfahren gemäß dem geltenden Patentanspruch 1. In den abhängigen Patentansprüchen sind vorteilhafte Ausführungsvarianten des Verfahrens beschrieben.

Ein solches Verfahren ist insbesondere für LIDAR Messsysteme geeignet, die nach dem TCSPC Verfahren, Time Correlated Single Photon Counting, arbeiten. Dieses TCSPC wird im Weiteren und insbesondere in der Figurenbeschreibung ausführlicher erläutert. Insbesondere ist das Verfahren für LIDAR Messsysteme gedacht, die in Kraftfahrzeugen zum Einsatz kommen.

Ein hierfür geeignetes LIDAR Messsystem weist Sensorelemente und Emitterelemente auf. Ein Emitterelement sendet Laserlicht aus und ist beispielsweise durch ein VCSEL, Vertical Cavity Surface Emitting Laser, ausgebildet. Das ausgesendete Laserlicht kann von dem Sensorelement detektiert werden, welches beispielsweise durch eine SPAD, Single Photon Avalanche Diode, ausgebildet ist. Der Abstand des Objekts von dem LIDAR Messsystem wird aus der Laufzeit des Laserlichts bzw. des Laserpulses bestimmt.

Die Emitterelemente sind vorzugsweise an einem Sendechip einer Sendeeinheit ausgebildet. Die Sensorelemente sind vorzugsweise an einem Empfangschip einer Empfangseinheit ausgebildet. Der Sendeeinheit und der Empfangseinheit ist entsprechend eine Sendeoptik bzw. eine Empfangsoptik zugewiesen. Das von einem Emitterelement ausgesendete Licht, wird durch die Sendeoptik einem Raumwinkel zugeordnet. Ebenso betrachtet ein Sensorelement über die Empfangsoptik immer denselben Raumwinkel. Dementsprechend ist ein Sensorelement einem Emitterelement zugewiesen bzw. beide sind demselben Raumwinkel zugewiesen. Das ausgesendete Laserlicht trifft nach einer Reflektion im Fernfeld dementsprechend immer auf dasselbe Sensorelement.

Die Sensorelemente und Emitterelemente sind vorteilhafterweise in einer Focal Plane Array Konfiguration, FPA, ausgeführt. Hierbei sind die Elemente einer jeweiligen Einheit in einer Ebene angeordnet, beispielsweise die Sensorelemente auf einer Ebene des Sensorchips. Diese Ebene ist in der Brennebene der jeweiligen Optik angeordnet bzw. sind die Elemente im Brennpunkt der jeweiligen Optik angeordnet.

Die FPA Konfiguration ermöglicht eine statische Ausbildung des LIDAR Messsystems und derer Sendeeinheit und Empfangseinheit, sodass dieses keine beweglichen Teile umfasst. Insbesondere ist das LIDAR Messsystem statisch an einem Kraftfahrzeug angeordnet.

Einem Emitterelement ist günstigerweise eine Mehrzahl an Sensorelementen zugewiesen, die gemeinsam eine Makrozelle aus mehreren Sensorelementen bilden. Diese Makrozelle bzw. alle Sensorelemente der Makrozelle sind einem Emitterelement zugeordnet. Dadurch können Abbildungseffekte oder Abbildungsfehler ausgeglichen werden, wie beispielsweise der Parallaxeeffekt oder Fehlabbildungen der Linse.

Abbildungsfehler der Optiken sind statisch, wohingegen die Parallaxe einen von dem Abstand des Objekts zu dem LIDAR Messsystem abhängige Beeinflussung einbringt. Beispielsweise sind bei nahen Objekten andere Sensorelemente der Makrozelle beleuchtet als bei Objekten im Mittel- oder Fernbereich. Zudem wird durch das dauerhafte Aktivieren aller Sensorelemente der Makrozelle eine Hintergrundstrahlung stärker erfasst, als wenn lediglich die benötigten Sensorelemente aktiv sind.

Ein Sensorelement oder ein Teil der Sensorelemente wird somit während eines Messzyklus aktiviert und / oder deaktiviert, um eine Detektion der Umgebungsstrahlung möglichst gering zu halten. Dieses Aktivieren und Deaktivieren des Sensorelements liegt zwischen dem Beginn und dem Ende eines Messzyklus, insbesondere zwischen dem ersten Aktivieren und dem letzten Deaktivieren des Sensorelements oder der Sensorelemente bezüglich des Messzyklus.

Die Sensorelemente der Makrozelle sind erfindungsgemäß für die verschiedenen Messbereiche in Sensorgruppen unterteilt, sodass jedem Messbereich eine Sensorgruppe zugordnet ist. Der Messbereich kann beispielhaft in einen Nahbereich, einen Mittelbereich und einen Fernbereich unterteilt werden, wobei in jedem der Bereiche eine andere Auswahl der Sensorelemente der Makrozelle aktiv ist. Hierfür können die Sensorelemente der Makrozelle einzeln oder zumindest als jeweilige Sensorgruppe gemeinsam aktiviert und / oder deaktiviert werden. Die Sensorelemente der Sensorgruppen können sich teilweise oder vollständig überlappen oder auch keine Überlappung innerhalb der Makrozelle aufweisen. Dies bedeutet, dass ein Sensorelement beispielsweise Mitglied der Sensorgruppe für den Mittelbereich und den Fernbereich sein kann oder auch ausschließlich einem bestimmten Messbereich zugeordnet ist.

Dementsprechend kann es auftreten, dass bei einem Übergang zwischen den Messbereichen, eine Sensorgruppe mit allen Sensorelementen deaktiviert wird und eine andere nicht überlappende Sensorgruppe aktiviert wird. In einer anderen Variante wird ein Teil der Sensorelemente deaktiviert, wohingegen ein Teil der Sensorelemente aktiv verbleibt. Gegebenenfalls können bei letzterer Variante zusätzlich auch noch weitere, bisher inaktive, Sensorelemente aktiviert werden.

Jedes der aktiven Sensorelemente trägt einen Teil zu einem Grundrauschen, der durch die Umgebungsstrahlung begründet ist, bei. Bezüglich des Messvorgangs und eines mit dem TCSPC Verfahren ermittelten Histogramms treten zwischen den verschiedenen Messbereichen Stufen auf, die sich aufgrund der Detektion der Umgebungsstrahlung durch die sich wechselnde Anzahl an aktiven Sensorelementen ergibt. Jedes Sensorelement trägt für seine aktive Zeitdauer zu dem Grundrauschen bei.

Ein Messvorgang umfasst eine Mehrzahl an Messzyklen. Das Histogramm ist das Ergebnis eines Messvorgangs. Ein Messzyklus weist zumindest die Zeitdauer auf, die das Laserlicht benötigt, um bis zu einem Objekt bei maximaler Messdistanz hin und zurück zu gelangen. Das Histogramm unterteil die Messdauer eines Messzyklus in Zeitabschnitte, die auch Bin genannt werden. Ein Bin entspricht einer gewissen Zeitdauer der gesamten Messdauer.

Wird ein Sensorelement durch ein eintreffendes Photon ausgelöst, so wird das Bin, welches der zugehörigen Laufzeit ausgehend von der Emission des Laserpulses entspricht, um den Wert 1 erhöht. Bei einem Messvorgang wird der Messzyklus mehrfach ausgeführt, sodass die Umgebungsstrahlung die Bins im Wesentlichen gleichmäßig füllt. Ein Objekt, welches das Laserlicht reflektiert sorgt jedoch bei jedem Messzyklus für die Füllung eines bestimmten Bins, welcher dem Abstand des Objekts von dem LIDAR Messsystem entspricht. Die Mehrzahl an Messzyklen sorgt für ein Auffüllen des Bins über das Grundrauschen hinaus, an dem sich das Objekt befindet. Das TCSPC Verfahren ist in der Figurenbeschreibung noch ausführlicher erläutert.

Schaltet man die jeweiligen Sensorgruppen in allen Messzyklen eines Messvorgangs bezüglich dem Beginn eines anderen Messbereichs immer zum gleichen Zeitpunkt des Messzyklus ein, so ergeben sich in dem Histogramm Stufen. Die Ermittlung von Objekten und deren Abstand von dem LIDAR Messsystem wird vorteilhafterweise durch Erkennung von ansteigenden Flanken und / oder lokaler Maxima durchgeführt. Die Stufe stellt eben gerade eine solche steil ansteigende Flanke dar, obwohl hierbei lediglich von einer Sensorgruppe auf eine andere Sensorgruppe umgeschaltet wird.

Es wird vorgeschlagen, dass bei einem ersten Messzyklus das Sensorelement zu einem ersten Zeitpunkt innerhalb des ersten Messzyklus aktiviert wird und bei einem zweiten Messzyklus innerhalb des zweiten Messzyklus dasselbe Sensorelement zu einem zweiten Zeitpunkt aktiviert wird. Dies wird auch Zeitabstand genannt.

Der erste Zeitpunkt und der zweite Zeitpunkt sind erfindungsgemäß verschieden zueinander. Ein Sensorelement wird insbesondere beim Umschalten von einem Messbereich auf einen anderen Messbereich aktiviert. Alternativ können anstelle des Sensorelements auch die Sensorelemente der jeweiligen Sensorgruppe aktiviert werden. Durch das von Messzyklus zu Messzyklus zeitversetzte Aktivieren der Sensorelemente wird die Stufe abgeflacht in eine ansteigende Linie, siehe auch Figurenbeschreibung. Insofern wird eine Detektion von Objekten wesentlich vereinfacht. Die Zeitpunkte beziehen sich auf einen Referenzzeitpunkt, welcher der Zeitpunkt der Lichtaussendung eines Lichtpulses mittels eines dem Sensorelement zugeordneten Emitterelementes ist.

Der Messzyklus umfasst mindestens die Zeitdauer, die der Lichtpuls bis zu einem Objekt bei maximaler Messdistanz und zurück braucht. Der erste Zeitpunkt und der zweite Zeitpunkt können innerhalb eines vorgegebenen Zeitbereichs liegen.

Beispielhaft umfasst ein Messvorgang X Messzyklen. Bei einem ersten Messzyklus erfolgt die Aktivierung des relevanten Sensorelements oder der relevanten Sensorgruppe bei Bin 100, bei dem zweiten Messzyklus bei Bin 101, bei dem dritten Messzyklus bei Bin 102, usw. Bei dem letzten Messzyklus erfolgt die Aktivierung bei Bin 100 + X - 1. Insbesondere steigt das Grundrauschen hierbei langsam und gleichmäßig an. Der Zeitabstand eines Bins ist hier beispielhaft gewählt, genauso wie der gleichmäßige Schrittabstand zwischen den Zeitpunkten. Insbesondere kann sich der Zeitabstand zwischen zwei Messzyklen für die Aktivierung des Sensorelements oder der Sensorgruppe frei gewählt und auch während eines Messvorgangs verändert werden. Der Zeitabstand kann positiv sowie auch negativ sein, also der zweite Zeitpunkt nach oder vor dem ersten Zeitpunkt liegen. Insbesondere werden die Zeitpunkte zufällig oder deterministisch bestimmt.

Ein Aktivieren von Sensorelementen entspricht sinngemäß dem Deaktivieren von Sensorelementen.

Hierdurch kann eine abfallende Flanke oder Stufe des Grundrauschens verhindert und stattdessen ein gleichmäßiges Abfallen des Grundrauschens erzielt werden.

Mit Vorteil wird für eine zu aktivierende und für eine im Wesentlichen zeitgleich zu deaktivierende Sensorgruppe der beschriebene Zeitabstand angewendet. Dadurch ergibt sich ein gleichmäßiger Übergang zwischen den Rauschniveaus der verschiedenen Messbereiche.

Es wird vorgeschlagen, dass der erste Zeitpunkt vor oder nach dem zweiten Zeitpunkt liegt.

Erfindungsgemäß liegen der erste Zeitpunkt und der zweite Zeitpunkt innerhalb eines vorgegebenen Zeitbereichs.

Dieser Zeitbereich definiert den Zeitabschnitt im Laufe eines Messzyklus, innerhalb dem ein Umschalten zwischen zwei Messbereichen stattfindet. Wenn der gesamte Zeitbereich von der Vielzahl an Zeitpunkten gleichmäßig und vollständig ausgenutzt wird, so ergibt die Breite die Steigung des Anstiegs oder des Abfalls des Grundrauschens. Der stufenförmige Anstieg des Grundrauschens wird über diesen Zeitabschnitt gestreckt, wodurch ein flacherer Anstieg gewährleistet wird. Die Breite des Zeitbereichs entspricht gemäß dem vorigen Beispiel beispielsweise der Breite von X Bins.

Bevorzugt sind der erste Zeitpunkt und der zweite Zeitpunkt aufeinanderfolgender Messzyklen zufällig gewählt.

Diese zufällige oder auch statistische Wahl der Zeitpunkte für alle Messzyklen ist aufgrund des statistischen Verhaltens des Systems möglich. Im Mittel ergibt sich dadurch ein gleichmäßiger Anstieg des Grundrauschens Insbesondere ist die zufällige Wahl durch den vorgegebenen Zeitbereich beschränkt. Hierdurch kann der Bereich beschränkt werden, innerhalb dem das Grundrauschen ansteigt. Alternativ ist der Zeitabstand zwischen zwei aufeinanderfolgenden Zeitpunkten aufeinanderfolgender Messzyklen für einen Messvorgang identisch, beispielsweise ein Bin, wie in vorigem Beispiel.

In einer weiteren Variante sind der erste Zeitpunkt und der zweite Zeitpunkt aufeinanderfolgender Messzyklen deterministisch gewählt.

Dies kann beispielsweise durch einen Modulo Zähler erfolgen, aufgrund dessen die Zeitpunkte mit ansteigendem Zähler gewählt werden. Beispielsweise sind für den Übergang 10 Bins vorgesehen, sodass die Zeitpunkte so gewählt sind, dass das Aktivieren oder Deaktivieren sich in Korrelation zu dem Zähler Bin für Bin, insbesondere zeitlich größer werdend, auffüllen. Gegebenenfalls können die Bins auch mehrfach gefüllt werden, wobei der Zähler nach dem Wert 10 wieder bei 1 beginnt. Alternativ kann auch der erste Bin mehrfach gefüllt werden, worauf anschließend der nächste Bin mehrfach befüllt wird, usw.

Wie bereits erwähnt können bei mehreren aufeinanderfolgenden Messzyklen dieselben Zeitpunkte verwendet werden. Dies kann direkt aufeinanderfolgend oder mit mehreren dazwischenliegenden Messzyklen erfolgen. Dadurch wird die Breite des Zeitbereichs verringert.

Es ist zweckmäßig, wenn ein in einem Messzyklus ein Zeitpunkt, der bereits zum Aktivieren und / oder zum Deaktivieren eines Sensorelements verwendet wurde, für nachfolgenden Messzyklen des Messvorgangs ausscheidet.

Dies gilt auch für Sensorgruppen. Mit anderen Worten kann ein Zeitpunkt für das Aktivieren oder das Deaktivieren desselben Sensorelements nur ein einziges Mal verwendet werden. Günstigerweise wird dies mit einem Zeitbereich kombiniert. Dadurch kann die Verwendung jedes Zeitpunkts trotz der zufälligen Auswahl gewährleistet werden.

In einer weiteren Variante kann ein Zeitpunkt für mehrere Messzyklen verwendet werden. Insbesondere bei der statistischen Auswahl kann der Zeitpunkt nach einer bestimmten Anzahl an Verwendungen verbraucht sein. Bei einer deterministischen Wahl ist die Anzahl der Verwendung eines Zeitpunkts bereits vorbestimmt.

Für jeden Zeitpunkt oder Bin kann eine andere Anzahl an Verwendungen bis zum Verbrauch des Zeitpunkts gewählt sein.

Beispielhaft sind 200 Messzyklen mit einem Zeitraum von 25 ns gewählt, wobei 4 Bins pro ns einer Anzahl von 100 Bins entsprechen. Also wird jede Bin zwei Mal als Startzeitpunkt verwendet.

In einem anderen Beispiel mit 200 Messzyklen und einem Zeitraum von 30 ns sind bei 4 Bins pro ns genau 120 Bins vorhanden. Bei einem deterministischen Muster von 1, 2, 2, 1, 2, 2, 1, 2, 2, ... werden 40 Bins einmal und 120 Bins zweimal als Startzeitpunkt verwendet.

Es wird weiter vorgeschlagen, dass sofern ein Deaktivieren eines Sensorelements mit einem Aktivieren eines anderen Sensorelements in Zusammenhang steht, der Zeitversatz zwischen dem Aktivieren und dem Deaktivieren der Sensorelemente für alle Messzyklen des Messvorgangs identisch ist oder zufällig verteilt ist.

Mit Zusammenhang ist hierbei der Übergang von einem Messbereich zu einem anderen Messbereich gemeint, also insbesondere wenn bezüglich des Übergangs von einem Messbereich in einen anderen Messbereich eine Sensorgruppe aktiviert und eine andere Sensorgruppe deaktiviert wird. Dies steht insofern in einem zeitlichen Zusammenhang, da die Messbereiche vorteilhafterweise lückenfrei aneinander anschließen, um alle Objekte innerhalb des gesamten Messbereichs zu detektieren. Erfindungsgemäß wird bei einem Übergang von einem ersten Messbereich zu einem zweiten Messbereich die dem ersten Messbereich zugeordnete Sensorgruppe deaktiviert und die dem zweiten Messbereich zugeordnete Sensorgruppe aktiviert.

Das bedeutet, dass das Aktivieren des zu aktivierenden Sensorelements von Messzyklus zu Messzyklus einen Zeitabstand erfährt. Ebenso erfährt das zu deaktivierende Sensorelement ebenso von Messzyklus zu Messzyklus einen Zeitabstand. Ein Zeitversatz entspricht dabei dem zeitlichen Abstand zwischen dem Aktivieren und dem Deaktivieren der Sensorelemente der aufeinanderfolgenden Messbereiche. Der Zeitversatz kann sowohl positiv, null oder auch negativ sein. Ist der Zeitabstand von den zu aktivierenden Sensorelementen und der Zeitabstand von den zu deaktivierenden Sensorelementen bezüglich zweier aufeinanderfolgender Messzyklen identisch, so verbleibt auch der Zeitversatz bei diesen beiden Messzyklen identisch. Sind die Zeitabstände verschieden, so ändert sich der Zeitversatz von dem einen zu dem anderen Messzyklus.

Der Zeitversatz kann somit für zwei, mehr als zwei oder alle Messzyklen identisch verbleiben oder sich auch von Messzyklus zu Messzyklus verändern, insbesondere deterministisch oder zufällig verändern, aufgrund der zufälligen Veränderung der Zeitabstände.

Mit Vorteil überlappen sich die Zeitbereiche verschiedener Sensorgruppen nicht, teilweise oder vollständig.

Durch diese fehlende Überlappung wird erreicht, dass in den Übergangsbereichen der Messabschnitte eine besonders genaue Messung erfolgt. Bei der fehlenden Überlappung sind vorzugsweise zwei Sensorgruppen gleichzeitig aktiv.

Die Zeitbereiche für die Zeitpunkte für die zu aktivierenden Sensorelemente sind bei einem Messvorgang vorzugsweise genau so groß wie die Zeitbereiche für die Zeitpunkte für zu deaktivierende Sensorelemente. Insbesondere können die Zeitbereiche identisch oder auch unterschiedlich sein. Auch eine zeitliche Verschiebung der Zeitbereiche zueinander ist möglich.

Bei einer vollständigen Überlappung der Zeitbereiche, also wenn ein Zeitbereich vollständig in einen anderen hineinpasst oder diese identisch sind, wird das Grundrauschen und auch ein eventuell vorhandenes Nutzsignal innerhalb der Rampe langsam und gleichmäßig von einem in den anderen Messbereich überführt, wobei ein Teil der Informationen zu einem Objekt in dem Histogramm von zwei Sensorgruppen jeweils zum Teil bereitgestellt wird.

Die Aufgabe wird zudem durch ein erfindungsgemäßes LIDAR Messsystem gelöst.

Das LIDAR Messsystem ist vorzugsweise gemäß einer der vorigen Ausführungen ausgebildet. Erfindungsgemäß umfasst das LIDAR Messsystem eine Sendeeinheit, eine Empfangseinheit und eine Steuereinheit zur zeitgesteuerten Aktivierung und Deaktivierung von Sensorelementen der Empfangseinheit.

Die Steuereinheit ist Teil der Elektronik. Insbesondere weist die Steuereinheit die Zeitsteuereinheit auf. Die Zeitsteuereinheit ist beispielsweise durch einen Timing-Controller ausgebildet oder weist einen solchen auf. Insbesondere steuert die Zeitsteuereinheit die Aktivierung und Deaktivierung der einzelnen Elemente des Messsystems, insbesondere der Sensorelemente und der Emitterelemente.

Die Zeitsteuereinheit ist erfindungsgemäß derart ausgebildet, dass es das Verfahren gemäß den vorigen Ausführungen durchführen kann. Insbesondere steuert die Zeitsteuereinheit das Aktivieren und Deaktivieren der Sensorelemente in Abhängigkeit des Referenzzeitpunkts, welcher dem Aussenden des Lichtpulses entspricht. Dieser Zeitpunkt kann durch einen Sensor detektiert werden oder intern durch die Zeitsteuereinheit ermittelt werden, beispielsweise weil die Zeitsteuereinheit auch das Aussenden des Laserpulses steuert.

Günstigerweise gibt die Zeitsteuereinheit die Zeitpunkte zur Aktivierung und Deaktivierung der Sensorelemente für jeden Messzyklus gemäß den vorigen Varianten vor.

Im Weiteren wird das Verfahren und das LIDAR Messsystem nochmals ausführlich anhand mehrerer Figuren erläutert. Es zeigen:
- Fig. 1: ein LIDAR Messsystem in schematischer Darstellung;
- Fig. 2: eine Sendeeinheit und eine Empfangseinheit des LIDAR Messsystems aus Figur 1 in einer Frontansicht;
- Fig. 3: einen Ablaufplan für einen Messzyklus sowie ein zugehöriges Histogramm;
- Fig. 4: einen Ablaufplan eines Messvorgangs.

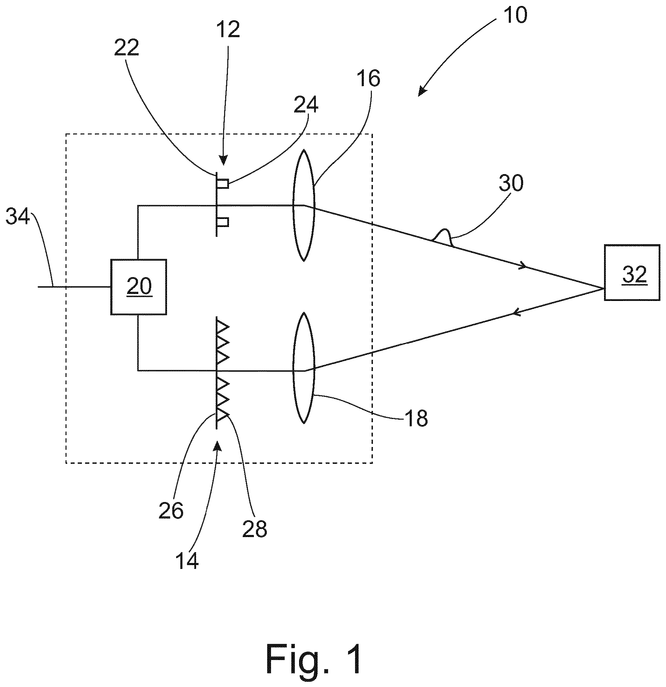

In der Figur 1 ist der Aufbau eines LIDAR Messsystems 10 schematisch dargestellt. Ein solches Messsystem 10 ist für die Verwendung an einem Kraftfahrzeug bestimmt. Insbesondere ist das Messsystem 10 statisch an dem Kraftfahrzeug angeordnet und zudem günstiger Weise selbst statisch ausgeführt. Dies bedeutet, dass das Messsystem 10 sowie auch seine Komponenten und Bauteile keine Relativbewegung zueinander ausführen oder ausführen können.

Das Messsystem 10 umfasst eine LIDAR Sendeeinheit 12, eine LIDAR Empfangseinheit 14, eine Sendeoptik 16, eine Empfangsoptik 18 sowie eine Elektronik 20.

Die Sendeeinheit 12 bildet einen Sendechip 22. Dieser Sendechip 22 weist eine Mehrzahl von Emitterelementen 24 auf, die für eine übersichtliche Darstellung schematisch als Quadrate dargestellt sind. Dem gegenüber ist die Empfangseinheit 14 durch einen Empfangschip 26 ausgebildet. Der Empfangschip 26 weist eine Mehrzahl an Sensorelementen 28 auf. Die Sensorelemente 28 sind schematisch durch Dreiecke dargestellt. Die tatsächliche Form von Emitterelementen 24 und Sensorelementen 28 kann sich jedoch von der schematischen Darstellung unterscheiden. Die Emitterelemente 24 sind vorzugsweise durch VCSEL, Vertical Cavity Surface Emitting Laser, ausgebildet. Die Sensorelemente 28 sind vorzugsweise durch SPAD, Single Photon Avalanche Diode, ausgebildet.

Die Sendeeinheit 12 und die Empfangseinheit 14 sind in einer FPA Konfiguration, Focal Plane Array, ausgebildet. Dies bedeutet, dass der Chip und die dazugehörigen Elemente auf einer Ebene, insbesondere einer flachen Ebene, angeordnet sind. Die jeweilige Ebene ist zudem in dem Brennpunkt oder der Brennebene eines Optikelements 16, 18 angeordnet. Dementsprechend sind die Emitterelemente 24 auf einer Ebene des Sendechips 22 angeordnet und liegen an dem Messsystem 10 innerhalb der Brennebene der Sendeoptik 16. Entsprechendes gilt für die Sensorelemente 28 des Empfangschips 26 bezüglich der Empfangsoptik 18.

Der Sendeeinheit 12 ist eine Sendeoptik 16 zugewiesen, der Empfangseinheit 14 ist eine Empfangsoptik 18 zugewiesen. Ein von dem Emitterelement 24 ausgesendetes Laserlicht oder ein auf ein Sensorelement 28 eintreffendes Licht durchläuft das jeweilige Optikelement 16, 18. Die Sendeoptik 16 weist jedem Emitterelement 24 einen bestimmten Raumwinkel zu. Ebenso weist die Empfangsoptik 18 jedem Sensorelement 28 einen bestimmten Raumwinkel zu.

Ein von dem jeweiligen Emitterelement 24 ausgesendetes Laserlicht wird von der Sendeoptik 16 immer in denselben Raumwinkel ausgestrahlt. Auch die Sensorelemente 28 betrachten aufgrund der Empfangsoptik 18 immer denselben Raumwinkel. Dementsprechend ist ein Sensorelement 28 immer demselben Emitterelement 24 zugewiesen. Insbesondere betrachten ein Sensorelement 28 und ein Emitterelement 24 denselben Raumwinkel. Da die Fig. 1 eine schematische Darstellung zeigt, ist der Raumwinkel in der Fig. 1 nicht korrekt dargestellt. Insbesondere ist der Abstand von Messsystem zu Objekt um ein vielfaches Größer als die Abmessungen des Messsystems selbst.

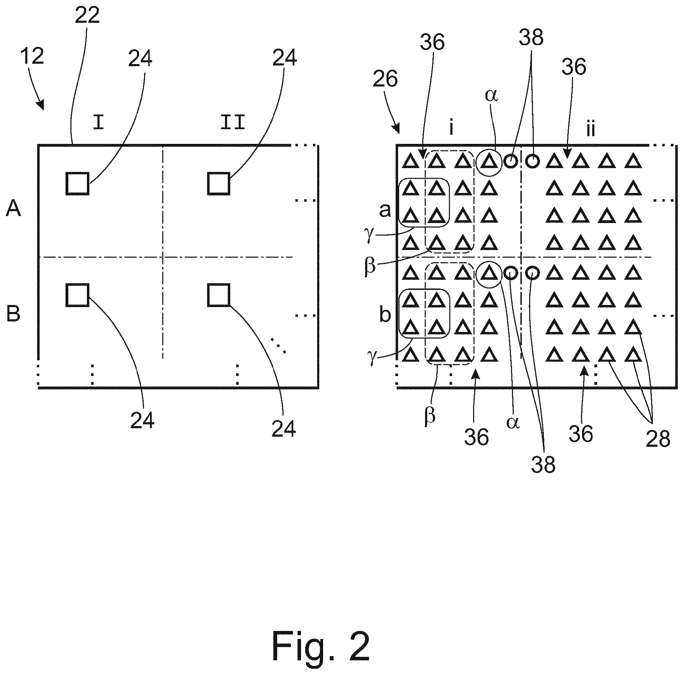

Bei diesem LIDAR Messsystem 10 ist einem einzelnen Emitterelement 24 eine Mehrzahl an Sensorelementen 28 zugewiesen, siehe Fig. 2. Die Sensorelemente 28, die einem gemeinsamen Emitterelement 24 zugewiesen sind, sind Teil einer Makrozelle 36, wobei die Makrozelle 36 dem Emitterelement 24 zugewiesen ist.

Ein Emitterelement 28 emittiert zu Beginn eines Messzyklus Laserlicht 30 in Form eines Laserpulses 30. Dieser Laserpuls 30 passiert die Sendeoptik 16 und wird in dem Emitterelement 24 zugeordnetem Raumwinkel ausgesendet. Befindet sich innerhalb dieses Raumwinkels ein Objekt 32 so wird zumindest ein Teil des Laserlichts 30 an diesem reflektiert. Der reflektierte Laserpuls 30, kommend aus dem entsprechenden Raumwinkel, wird durch die Empfangsoptik 18, auf das zugehörige Sensorelement 28 oder die einer Makrozelle 36 zugehörigen Sensorelemente 28 geleitet. Die Sensorelemente 28 detektieren den eintreffenden Laserpuls 30, wobei ein Auslösen der Sensorelemente 28 von einem TDC 38, Time to Digital Converter, ausgelesen und in ein Histogramm geschrieben wird. Mit Hilfe der Time of Flight Methode kann aus der Laufzeit des Laserpulses 30 die Entfernung des Objekts 32 zu dem Messsystem 10 bestimmt werden. Die Ermittlung von Objekten 32 und deren Abständen erfolgt vorteilhafterweise mithilfe des TCSPC Verfahrens, Time Correlated Single Photon Counting. Das TCSPC Verfahren wird im Weiteren noch ausführlicher beschrieben.

Der Ablauf eines solchen Messzyklus wird durch die Elektronik 20 gesteuert, welche zumindest die Sensorelemente 28 auslesen kann. Die Elektronik 20 ist zudem über eine Verbindung 34 mit weiteren elektronischen Komponenten des Kraftfahrzeugs verbunden oder verbindbar, insbesondere zum Datenaustausch. Die Elektronik 20 ist hierbei als schematischer Baukasten dargestellt. Weitere detaillierte Erläuterungen sollen hierzu jedoch nicht gemacht werden. Es ist zu bemerken, dass die Elektronik 20 über eine Mehrzahl an Bauteilen oder Baugruppen des Messsystems 10 verstreut sein kann. Hierbei ist beispielsweise ein Teil der Elektronik 20 an der Empfangseinheit 14 ausgebildet.

In der Figur 2 sind der Sendechip 22 und der Empfangschip 26 schematisch in einer Frontansicht dargestellt. Dabei ist lediglich ein Teilausschnitt dargestellt, wobei die weitergehenden Bereiche im Wesentlichen identisch zu den dargestellten sind. Der Sendechip 22 weist die bereits beschriebenen Emitterelemente 24 auf, die in einer Spalten- und Zeilenanordnung angeordnet sind. Diese Zeilen- und Spaltenanordnung ist jedoch nur beispielhaft gewählt. Die Spalten sind mit großen römischen Ziffern versehen, die Zeilen mit großen lateinischen Buchstaben.

Der Empfangschip 26 weist eine Vielzahl an Sensorelementen 28 auf. Die Anzahl der Sensorelemente 28 ist größer als die Anzahl der Emitterelemente 24. Auch die Sensorelemente 28 sind in einer Zeilen-/ Spaltenanordnung ausgebildet. Auch diese Zeilen- /Spaltenanordnung ist lediglich beispielhaft gewählt. Die Spalten werden mit kleinen römischen Ziffern beziffert, die Zeilen mit kleinen lateinischen Buchstaben. Eine Zeile bzw. eine Spalte des Empfangschips 26 bezieht sich jedoch nicht auf die einzelnen Sensorelemente 28, sondern auf eine Makrozelle 36, die eine Mehrzahl von Sensorelementen 28 aufweisen. Die Makrozellen 36 sind durch Strichlinien zur besseren Darstellung voneinander abgetrennt. Die Sensorelemente 28 einer Makrozelle 36 sind alle einem einzigen Emitterelement 24 zugewiesen. Die Makrozelle i, a ist beispielsweise dem Emitterelement I, A zugewiesen. Ein von einem Emitterelement 24 ausgesendetes Laserlicht 30 bildet zumindest auf einen Teil der Sensorelemente 28 der zugehörigen Makrozelle 36 ab.

Die Sensorelemente 28 sind vorteilhafterweise einzeln oder zumindest in Gruppen aktivierbar und deaktivierbar. Dadurch können die jeweils relevanten Sensorelemente 28 einer Makrozelle 36 aktiviert und die irrrelevanten deaktiviert werden. Dies ermöglicht den Ausgleich von Abbildungsfehlern. Solche Abbildungsfehler können beispielsweise statische Fehler sein, wie Abbildungsfehler der Optikelemente 16, 18 oder auch Parallaxenfehler, welcher im Folgenden Abschnitt beispielhaft erläutert wird.

Aufgrund der Parallaxe wird beispielsweise ein ausgesendetes Laserlicht 30 im Nahbereich, also bei geringem Abstand des Objekts 32 auf die in der Figur 2 oben angeordneten Sensorelemente 28 der Makrozelle 36 abgebildet. Befindet sich das Objekt jedoch weiter entfernt von dem Messsystem 10, so wird das reflektierte Laserlicht 30 auf einen unteren Bereich der Makrozelle 36 und damit auf die unten liegenden Sensorelemente 28 treffen. Die Verschiebung des eintreffenden Laserlichts aufgrund der Parallaxe ist insbesondere von der Anordnung der Einheiten und der konstruktiven Ausführung des Messsystems 10 abhängig.

Die Sensorelemente 28 einer Makrozelle 36 werden sodann während eines Messzyklus aktiviert und deaktiviert, sodass unbeleuchtete Sensorelemente deaktiviert sind. Da jedes aktive Sensorelement die Umgebungsstrahlung als Grundrauschen detektiert, wird durch deaktivieren der unbeleuchteten Sensorelemente das Grundrauschen einer Messung klein gehalten. Beispielhaft sind in der Figur 2 an dem Empfangschip 26 drei Sensorgruppen eingezeichnet.

Beispielshaft sind hier die Sensorgruppen α, β und γ eingezeichnet, welche lediglich der Erläuterung des Verfahrens dienen. Grundsätzlich können die Sensorgruppen auch anders gewählt werden. Die Sensorgruppe α umfasst ein einziges Sensorelement 28, mit dem ein Nahbereich zu Beginn des Messzyklus detektiert werden soll. Die Sensorgruppe β umfasst eine Mehrzahl an Sensorelementen 28, die bei einer mittleren Messdistanz aktiv sind. Die Sensorgruppe γ umfasst einige Sensorelementen 28, die in einem Fernbereich aktiv sind. Die Anzahl der Sensorelemente 28 der Sensorgruppe β ist am größten, gefolgt von der Sensorgruppe γ.

Die Auswahl der Sensorelemente 28 für die Sensorgruppen α, β und γ ist lediglich beispielhaft gewählt und kann sich bei einem Anwendungsfall auch von den dargestellten unterscheiden, ebenso wie die Ausführung der Sensorelemente 28 und die Anordnung gegenüber den Emitterelementen 24.

Im Nahbereich ist im Normalfall nur eine kleine Anzahl von Sensorelementen 28 aktiv. Beispielsweise können diese Sensorelemente 28 sich auch konstruktiv von den anderen Sensorelementen 28 unterscheiden, um bestimmten Anforderungen für den Nahbereich Rechnung zu tragen.

Die Sensorgruppe γ ist ein Teilausschnitt aus der Sensorgruppe β, weist aber auch zwei Sensorelemente 28 auf, die für die Sensorgruppe γ exklusiv sind. Beispielsweise können sich die verschiedenen Sensorgruppen auch vollständig überlappen, also eine gemeinsame Anzahl an Sensorelementen 28 aufweisen. Es können allerdings auch alle Sensorelemente 28 einer Sensorgruppe exklusiv dieser Sensorgruppe zugeordnet sein. Es kann auch auftreten, dass auch nur ein Teil der Sensorelemente 28 für eine Sensorgruppe exklusiv ist, wobei die restlichen Sensorelemente 28 Teil mehrerer Sensorgruppen sind.

Bei einem Übergang von einem ersten Messbereich zu einem zweiten Messbereich, beispielsweise vom Mittelbereich zum Fernbereich wird sodann lediglich ein Teil der Sensorelemente der zuvor aktiven Sensorgruppe deaktiviert, wobei ein Teil der Sensorelemente aktiviert verbleibt und gegebenenfalls eine weitere Anzahl an Sensorelementen 28 aktiviert wird.

Die Sensorelemente 28 sind mit einem TDC 38, Time to Digital Converter, verbunden. Dieser TDC 38 ist Teil der Elektronik 20. An der Empfangseinheit ist für jede Makrozelle 36 ein TDC 38 ausgebildet, der mit allen Sensorelementen 28 der Makrozelle 36 verbunden ist. Diese Ausgestaltungsvariante für die TDC 38 ist jedoch beispielhaft.

Ein als SPAD ausgebildetes Sensorelement 28, welches zugleich aktiv ist, kann durch ein eintreffendes Photon ausgelöst werden. Diese Auslösung wird durch die TDC 38 ausgelesen. Die TDC 38 trägt diese Detektion sodann in ein Histogramm des Messvorgangs ein. Dieses Histogramm wird im Weiteren noch ausführlich erläutert. An der SPAD muss nach einer Detektion zunächst wieder die notwendige Vorspannung aufgebaut werden. Innerhalb dieser Zeit ist die SPAD blind und kann nicht durch eintreffende Photonen ausgelöst werden. Diese zum Aufladen benötigte Zeit wird auch Totzeit genannt. Diesbezüglich ist auch anzumerken, dass eine inaktive SPAD eine gewisse Zeit zum Aufbau der Betriebsspannung benötigt.

Die Emitterelemente 24 des Messsystems 10 senden ihre Lichtpulse nacheinander aus, beispielsweise zeilen- oder reihenweise. Dadurch wird verhindert, dass eine Reihe oder Spalte an Emitterelementen 24 die Sensorelemente 28 der benachbarten Reihe oder Spalte von Makrozellen 36 auslöst, vermieden. Insbesondere sind nur die Sensorelemente 28 der Makrozellen 36 aktiv, deren korrespondierende Emitterelemente 24 ein Laserlicht 30 ausgesendet haben.

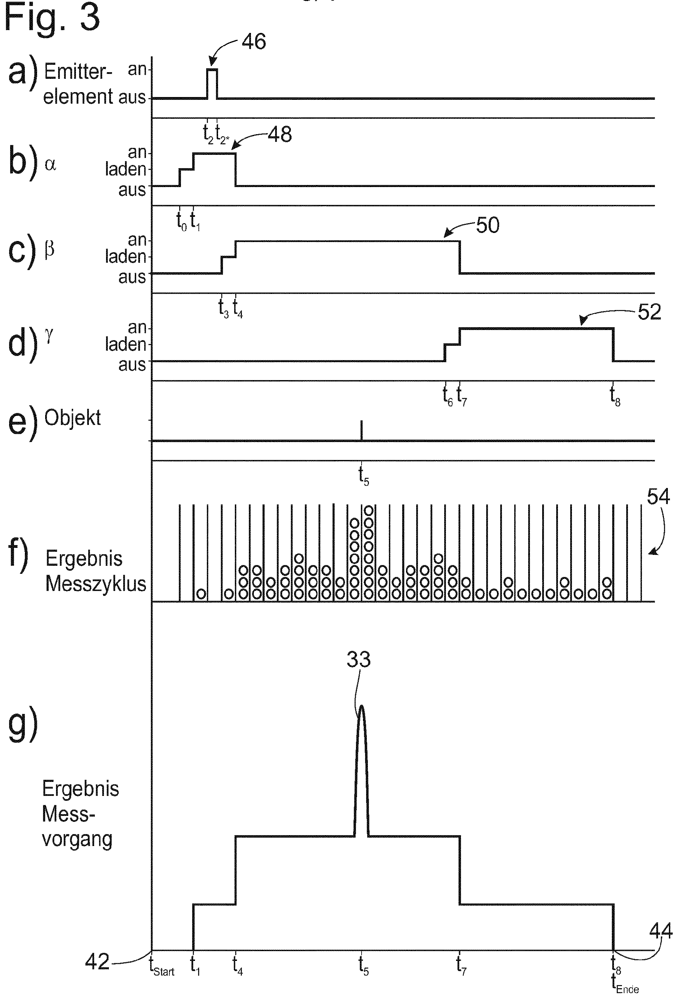

Wie bereits erwähnt, wird für die Bestimmung des Abstands der Objekte das TCSPC-Verfahren bereitgestellt. Dieses wird anhand der Figur 3 erläutert. Bei dem TCSPC wird ein Messvorgang durchgeführt, um etwaige Objekte und deren Abstand von dem Messsystem 10 zu ermitteln. Ein Messvorgang umfasst mehrere wesensgleiche Messzyklen, die identisch wiederholt werden, um ein Histogramm bereitzustellen.

Dieses Histogramm wird sodann ausgewertet, um etwaige Objekte und deren Abstand zu ermitteln. Die Figur 3 umfasst dabei mehrere Unterfiguren a, b, c, d, e, f, g. Jede der Figuren weist dabei eine eigene Y-Achse auf, jedoch teilen sich diese eine gemeinsame X-Achse, auf der die Zeit aufgetragen ist. Die Fig. 3a bis 3f zeigen einen einzelnen Messzyklus, wobei die Fig. 3g das Ergebnis eines gesamten Messvorgangs darstellt. Ein Messvorgang startet zum Zeitpunkt *tₛₜₐᵣₜ* und endet zum Zeitpunkt *t_{ende}.*

In der Figur 3a ist die Aktivität eines Emitterelements 46 im Laufe eines Messzyklus dargestellt. Das Emitterelement wird zum Zeitpunkt *t*₂ aktiviert und kurz darauf zum Zeitpunkt *t*_{2*} deaktiviert, wodurch ein Laserpuls ausgesendet wird.

Die Figuren b, c und d zeigen die Aktivitätsphasen der Sensorelemente 28 der Sensorgruppen α, β und γ innerhalb eines Messzyklus. Das Sensorelement der Sensorgruppe α wird bereits vor dem Aussenden des Laserpulses zum Zeitpunkt *t*₀ geladen und ist bereits zum Zeitpunkt *t*₁ aktiv. Die Zeitpunkte *t*₁ und *t*₂ können hierbei zeitlich aufeinander fallen oder versetzt zueinander sein. Die Sensorgruppe α ist somit spätestens mit dem Aussenden des Laserpulses 30 aktiv. Dies entspricht dem Nahbereich.

Die Sensorelemente der Sensorgruppe β werden kurz vor dem Deaktivieren der Sensorgruppe α zum Zeitpunkt *t*₃ geladen und sind zum Zeitpunkt *t*₄, an dem die Sensorgruppe α deaktiviert wird, aktiv. Die Sensorgruppe β, die den Mittelbereich abdeckt, verbleibt für einen längeren Zeitraum aktiv, bis diese zum Übergang des Fernbereichs hin abgeschaltet wird.

Die Aktivität der Sensorelemente 28 der Sensorgruppe γ ist in der Figur 3d dargestellt. Da die Sensorgruppe γ zum Teil eine Untergruppe von β ist, werden zum Zeitpunkt *t*₇ die überlappenden Sensorelemente 28 aktiv gelassen, wohingegen die übrigen Sensorelemente 28 der Sensorgruppe β deaktiviert werden. Die verbleibenden Sensorelemente 28 der Sensorgruppe γ werden bereits vorab zum Zeitpunkt *t*₆ geladen. Die Sensorgruppe γ verbleibt ebenfalls für einen langen Zeitraum aktiv, bis diese zum Zeitpunkt *t*₈ deaktiviert werden. Der Zeitpunkt *t*₈ entspricht ebenso dem Ende des Messzyklus zum Zeitpunkt *t_{ende}*. Das Ende des Messzyklus muss in anderen Ausführungsbeispielen jedoch nicht identisch mit dem Deaktivieren der letzten aktiven Sensorgruppe sein. Der Beginn des Messzyklus 42 ist durch den Zeitpunkt *tₛₜₐᵣₜ* und das Ende des Messzyklus 44 ist durch den Zeitpunkt *t_{ende}* definiert.

Der Messzyklus umfasst somit das Aussenden des Laserpulses 46, das Umschalten der Sensorgruppen sowie die Detektion von eintreffendem Licht im Nahbereich 48, im Mittelbereich 50 sowie im Fernbereich 52.

In der Figur 3e ist beispielhaft ein Objekt 32 dargestellt, welches sich im Mittelbereich aufhält. Die Darstellung entspricht dabei der Reflexionsfläche des Objekts 32. Der an dem Objekt 32 reflektierte Laserpuls 30 kann von den aktiven Sensorelementen 28 der Sensorgruppe β zum Zeitpunkt *t*₅ detektiert werden.

In der Figur 3f ist ein Histogramm 54 dargestellt, welches eine beispielhafte Füllung mehrerer Messzyklus darstellt. Das Histogramm unterteilt die Gesamtheit des Messzyklus in einzelne Zeitabschnitte. Ein solcher Zeitabschnitt eines Histogramms 54 wird auch Bin 56 genannt. Die TDC 38, welche das Histogramm 54 befüllt, liest die Sensorelemente 28 aus. Lediglich ein aktives Sensorelement 28 kann eine Detektion an die TDC 38 weitergeben. Wird eine SPAD durch ein Photon ausgelöst, so befüllt die TDC 38 das Histogramm, welches beispielsweise durch einen Speicher abgebildet wird, mit einer digitalen 1 bzw. einer Detektion 58. Die TDC verknüpft diese Detektion 58 mit der aktuellen Zeit und befüllt das dazugehörige Bin 56 des Histogramms 54 mit dem digitalen Wert.

Da es lediglich ein einziges Objekt 32 im Mittelbereich gibt, kann auch lediglich dieses eine Objekt 32 detektiert werden. Dennoch ist das Histogramm über den gesamten Messzyklus mit Detektionen 58 befüllt. Diese Detektionen 58 werden durch die Hintergrundstrahlung erzeugt. Die Photonen der Hintergrundstrahlen können die SPADs auslösen. Die Höhe des dadurch erzeugten Grundrauschens ist somit von der Anzahl der aktiven SPADs abhängig, also der Anzahl der Sensorelemente 28 einer Sensorgruppe.

Man erkennt, dass im Nahbereich 48 lediglich zwei Bins 56 mit jeweils einer Detektion 58 gefüllt sind, wobei ein drittes Bin leer bleibt. Dies entspricht der ermittelten Hintergrundstrahlung. Die Anzahl der Detektionen ist sehr gering, da lediglich eine einzelne SPAD aktiv ist.

In dem zeitlich darauffolgenden Mittelbereich 50 ist die Sensorgruppe β aktiv, die ein Mehrfaches an aktiven Sensorelementen 28 aufweist. Dementsprechend ist auch die detektierte Hintergrundstrahlung größer, so dass ein Bin im Mittel mit drei Detektionen 58 gefüllt ist, teilweise auch 4 oder 2 Detektionen 58. In dem Bereich 32, in dem sich die reflektierende Oberfläche des Objekts 32 zum Zeitpunkt *t*₅ des Messzyklus befindet, ist die Anzahl der Detektionen 58 wesentlich höher. Hierbei sind sieben oder acht Detektionen 58 im Histogramm 54 verzeichnet.

In dem Fernbereich 52 befindet sich kein Objekt, welches detektiert werden kann. Hierbei ist lediglich die Hintergrundstrahlung mit im Mittel ein bis zwei Detektionen 58 pro Bin dargestellt. Der Mittelwert des Grundrauschens ist dementsprechend geringer als im Mittelbereich 50, da auch die Anzahl der SPADS geringer ist. Der Mittelwert der Detektionen 58 ist jedoch höher als im Nahbereich 48, da der Nahbereich 48 mit der Sensorgruppe α nur einen Bruchteil der Anzahl der Sensorelementen 28 der Sensorgruppe γ aufweist.

Das dargestellte Histogramm ist wie bereits erwähnt lediglich beispielhaft gefüllt. Die Anzahl der Bins und auch deren Füllung können sich bei tatsächlichen Messzyklen wesentlich unterscheiden. Aus einem einzelnen Messzyklus oder wenigen Messzyklen kann im Normalfall noch kein Objekt 32 detektiert werden. Dementsprechend werden bei dem TCSPC Verfahren eine Vielzahl an Messzyklen nacheinander ausgeführt. Dabei füllt jeder Messzyklus dasselbe Histogramm. Ein solches Histogramm, welches durch eine Vielzahl an Messzyklen gefüllt wurde, ist in der Fig. 3g dargestellt.

Das Histogramm der Figur 3g ist ebenfalls durch digital gefüllte Bins ausgebildet. Für eine übersichtlichere Ansicht wurde in dieser Figur jedoch auf die Darstellung jedes Bins verzichtet und lediglich eine Linie eingezeichnet, die der Füllmenge der Bins entspricht.

Im Nahbereich 48 ergibt sich ein niedriges Grundrauschen, im Mittelbereich 50 ergibt sich das höchste Grundrauschen, da hier auch die meisten Sensorelemente aktiv sind. Im Fernbereich 52 liegt das ermittelte Grundrauschen zwischen dem des Nahbereichs 48 und dem des Mittelbereichs 50. Man kann zudem im Mittelbereich 50 die Detektion des von dem Objekt 32 reflektierten Laserlicht 30 in Form eines Peaks 33 erkennen. Die ermittelte Hintergrundstrahlung ist statistisch gleichmäßig verteilt, wodurch eine im Wesentlichen gerade Linie in Abhängigkeit der Anzahl der aktiven Sensorelemente bereitgestellt wird. Das Objekt und dessen reflektierende Oberfläche sind jedoch immer an derselben Stelle und über die Summe der Messzyklen steht der Peak 33 über das Grundrauschen hervor.

Bei der Ermittlung des Histogramms gemäß der Figur 3g wurde der Messzyklus der Figur 3 vielfach identisch wiederholt. Insbesondere sind alle beschriebenen Aktionen immer zu denselben Zeitpunkten *t*₀ bis *t*₈ durchgeführt.

Das Histogramm der Figur 3g wird nun ausgewertet, um Objekte zu identifizieren und deren Abstand zu bestimmen. Für die Detektion wird zumeist der Anstieg, also eine steil ansteigende Flanke des Histogrammverlaufs ausgewertet. Bei dem Zeitabstand an dem sich das Objekt 32 befindet kann so dann über die Lichtgeschwindigkeit der Abstand des Objekts berechnet werden. Problematisch wird es bei dem Histogramm gemäß der Figur 3g gerade dann, wenn sich das Objekt in einem Abstand befindet, der den Umschaltbereich zwischen Nahbereich und Mittelbereich sowie zwischen Mittelbereich und Fernbereich entspricht.

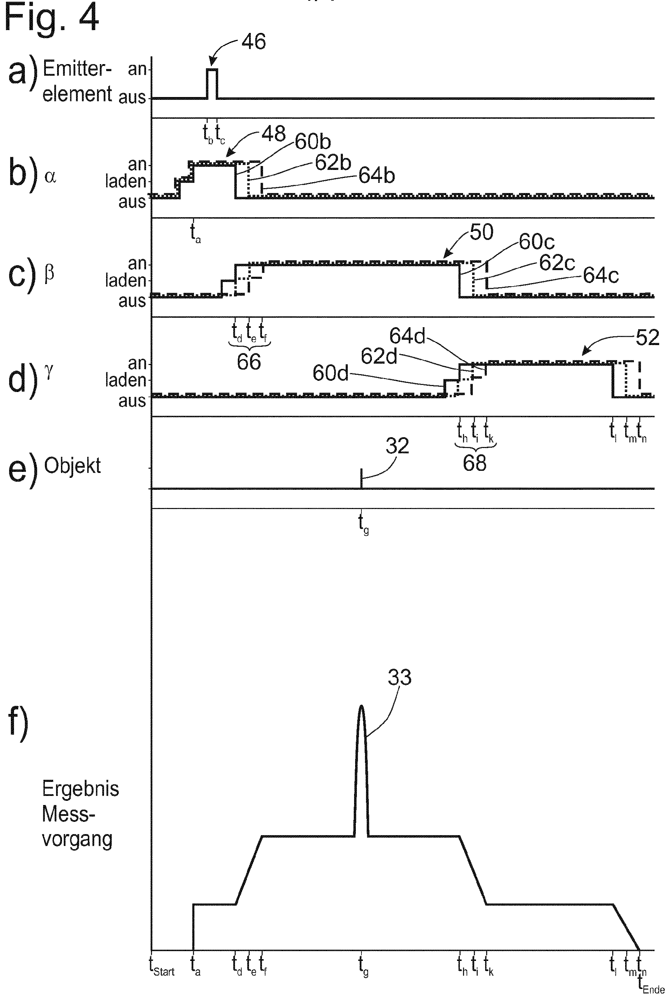

Legt man nun fest, dass zu den Umschaltzeitpunkten keine Auswertung von möglichen Objekten stattfindet, so wäre man in diesen Übergangsbereichen blind. Macht man diese Festlegung nicht, so würde man andererseits zu den Umschaltzeitpunkten immer ein statisches Objekt detektieren, auch wenn dort gar keines ist, oder man könnte ein tatsächliches Signal nicht von der Flanke des Umschaltzeitpunkts unterscheiden. Dieses Problem wird durch die nachfolgenden Ausführungen zur Steuerung der Sensorelemente gelöst. Dieses Verfahren soll anhand der Figur 4 näher erläutert werden.

Der grundsätzliche Ablauf eines Messzyklus ist unverändert zu dem in Figur 3b. Jedoch unterscheidet sich jeder Messzyklus des Messvorgangs geringfügig von den anderen Messzyklen. Die Figur 4a, b, c, d, e, zeigen jeweils dieselben Vorgänge, wie auch die Figuren 3a, b, c, d, jedoch für drei verschiedene Messzyklen. Ein erster Messzyklus des Messvorgangs ist beispielsweise durch die durchgezogene Linie 60 dargestellt, ein letzter Messzyklus des Messvorgangs durch die gestrichelte Linie 64 und ein dazwischen liegender Messzyklus des Messvorgangs durch die gepunktete Linie 62. Bezüglich der Teilfiguren a, b, c, d, sind die jeweiligen Linien durch den Zusatz b, c, d, ergänzt.

Im Weiteren werden lediglich die Zeitpunkte beschrieben, zu denen eine Sensorgruppe und deren Sensorelemente aktiviert und deaktiviert werden. Sofern es sich um SPADs handelt müssen diese ebenfalls geladen werden. Der Einfachheit halber wird diese Ladephase jedoch nicht beschrieben. Die vorigen Ausführungen in Fig. 3 zu dem Messzyklus und auch dem Messvorgang gelten auch für die nachfolgenden Ausführungen, sofern diese dem nicht entgegenstehen.

Zu einem Zeitpunkt *tₐ* wird bei dem Messzyklus 60, 62 und 64 die Sensorgruppe α aktiviert. Dieser Zeitpunkt *tₐ* bleibt für alle Messzyklen des Messvorgangs unverändert.

Das Emitterelement 24 wird zum Zeitpunkt *t_{b}* aktiviert und zum Zeitpunkt *t_{c}* deaktiviert, wodurch der Laserpuls 30 ausgesendet wird. Der Zeitpunkt *t_{Q}* liegt vor dem Zeitpunkt *t_{b}* oder beide sind identisch.

Die erste Sensorgruppe α wird bei dem Messzyklus 60 zum Zeitpunkt *t_{d}* deaktiviert, bei dem die Sensorgruppe β aktiviert wird. In einem später folgenden Messzyklus 62 desselben Messvorgangs wird die erste Sensorgruppe α jedoch erst zu einem späteren Zeitpunkt *tₑ* deaktiviert. Ebenso wird bei dem Messzyklus 62 die Sensorgruppe β auch erst zum Zeitpunkt *tₑ* aktiviert. Und bezüglich des nochmals später folgenden Messzyklus wird die Sensorgruppe α und die Sensorgruppe β erst bei einem Zeitpunkt *t_{f}* deaktiviert bzw. aktiviert. Insbesondere liegt der Zeitpunkt *t_{f}* nach dem Zeitpunkt *tₑ*, welcher wiederum nach dem Zeitpunkt *t_{d}* liegt. Die Länge des Nahbereichs 48 und die Länge des Mittelbereichs 50 sowie deren Ende bzw. Anfang wird über die Anzahl der Messzyklen zeitlich verschoben. Dadurch wird der steile Stufenanstieg, siehe auch Fig. 4f, abgeflacht. Sind die Zeitabstände zwischen den Zeitpunkten der einzelnen Messzyklen identisch, so wird ein gleichmäßiger Anstieg erreicht. Beispielsweise kann ein solcher Zeitabstand der Zeitdauer eines Bins entsprechen. Grundsätzlich können die Zeitabstände sich von Messzyklus zu Messzyklus unterscheiden, wobei eine gleichmäßige Verteilung der Zeitabstände bevorzugt wird.

Der zeitliche Abstand bezüglich eines einzigen Zeitpunkts in zwei Messzyklen wird als Zeitabstand bezeichnet.

Der flache Anstieg oder auch Abfall des Grundrauschens ergibt sich daraus, dass die Sensorgruppe β im Messzyklus 60 ab dem Zeitpunkt *t_{d}* einen Anteil für das Grundrauschen einbringt. Bei einem Messzyklus 62 wird ein Anteil zu dem Grundrauschen jedoch erst ab dem Zeitpunkt *tₑ* eingebracht und bei dem Messzyklus 64 erst ab dem Zeitpunkt *t_{f}*. Dementsprechend steigt das Grundrauschen langsam und stetig an. Da das Histogramm die Messdauer eines Messzyklus in Bins aufteilt ist der Anstieg im Wesentlichen weiterhin stufenförmig. Jedoch sind die Stufen derart klein, dass diese bei der Auswertung des Histogramms unproblematisch sind. Insbesondere werden die Rampen auf eine Zeitdauer gedehnt, die größer ist als die Zeitdauer des Lichtpulses, insbesondere ein vielfaches der Zeitdauer des Lichtpulses.

Bei einer nachfolgenden Auswertung des Histogramms kann an dem Übergang zwischen den verschiedenen Messbereichen ein Objekt problemlos detektiert werden. Zudem kann dadurch auch eine Fehldetektion ausgeschlossen werden.

Die Aktivierung der Sensorgruppe α bedarf keiner solcher Zeitabstände, da der Laserpuls immer zur selben Zeit ausgesendet wird und die Sensorgruppe α sodann bereits aktiv ist.

Der Übergang von der Sensorgruppe β zur Sensorgruppe γ verhält sich wie der Übergang von der Sensorgruppe α zur Sensorgruppe β. Für den Messzyklus 60 ist dies der Zeitpunkt *tₕ*, für den Messzyklus 62 der Zeitpunkt *tᵢ* und für den Messzyklus 64 der Zeitpunkt *tₖ*. Dementsprechend ist der Abfall des Histogramms von dem Grundrauschen des Mittelbereichs 50 auf das Grundrauschen des Fernbereichs 52 flacher und gleichmäßiger.

Optional kann auch der Fernbereich 52 zu den Zeitpunkten *tₗ*,*tₘ* und *tₙ* zeitversetzt mit einem Zeitabstand deaktiviert werden.

Die Zeitpunkte können zufällig von Messzyklus zu Messzyklus gewählt werden. Insbesondere wird ein Zeitabstand von Messzyklus zu Messzyklus zufällig gewählt. Dadurch ergibt sich im statistischen Mittel ein gleichmäßig ansteigendes Grundrauschen. Hierbei ist ein Zeitbereich 66 von *t_{d}* bis *t_{f}* vorgegeben, aus dem die Zeitpunkte zufällig ausgewählt werden. Ein weitere Zeitbereich 68 reicht von *tₕ* bis *tₖ*.

Alternativ können die Zeitpunkte auch deterministisch gewählt werden, beispielsweise durch ein vorgegebenes Muster. Vorzugsweise wird durch die deterministische Wahl eine Gleichverteilung der Zeitpunkte bereitgestellt.

Optional kann ein Zeitpunkt innerhalb des Zeitbereichs 66, 68, der bereits für eine Aktivierung oder Deaktivierung einer Sensorgruppe verwendet wurde nicht mehr für weitere Messzyklen ausgewählt werden. Beispielsweise wird in einem ersten Messzyklus der Zeitpunkt *tₑ* ausgewählt, so steht dieser für die weiteren Messzyklen nicht mehr zur Verfügung. Dadurch kann eine zufällige Auswahl getroffen werden und dennoch eine vorbestimmte Menge an Zeitpunkten verwendet werden. Insbesondere lassen sich durch solch eine statistische Auswahl bestimmte Fehlerquellen ausschließen.

Gemäß der Fig. 4c und 4d wird die Sensorgruppe β zu demselben Zeitpunkt deaktiviert, wie die Sensorgruppe γ aktiviert wird. Demnach ist ein Zeitversatz zwischen der Deaktivierung der Sensorelemente der Sensorgruppe β und der Aktivierung der Sensorelemente der Sensorgruppe γ gleich Null. Dieser Zeitversatz ist für alle Messzyklen 60, 62 und 64 identisch und ändert sich über den gesamten Messvorgang nicht.

Der Zeitversatz ist der zeitliche Abstand zwischen einem Zeitpunkt bei dem einem Sensorgruppe deaktiviert wird und einem Zeitpunkt, bei dem eine Sensorgruppe aktiviert wird, innerhalb eines einzigen Messzyklus.

In einer alternativen Ausführungsvariante kann dieser Zeitversatz ungleich null sein. Beispielweise wird die Sensorgruppe γ aktiviert und erst nach Ablauf des Zeitversatzes wird die Sensorgruppe β deaktiviert. Auch in entgegengesetzter Richtung ist dies möglich. Ein solcher identischer Zeitversatz bei dem Umschalten zwischen zwei Sensorgruppen ist vorteilhaft, wenn die Sensorgruppen überlappende Sensorelemente aufweisen. Hierdurch ist der gleichmäßige Anstieg oder Abfall des Grundrauschens gewährleistet.

Der Zeitversatz kann sich jedoch auch von Messzyklus zu Messzyklus verändert. Dies ist beispielsweise dann möglich, wenn zwischen den zeitlich aufeinanderfolgenden Sensorgruppen keine Überlappung der Sensorelemente gegeben ist.

Die zufällige Auswahl ist beispielsweise dann sinnvoll, wenn die Zeitpunkte zum Deaktivieren der Sensorgruppe β und auch die Zeitpunkte zum Aktivieren der Sensorgruppe γ zufällig und unabhängig voneinander ausgewählt werden. Wie bereits erwähnt ist jedoch auch eine deterministische Wahl möglich.

Für eine Durchführung des Verfahrens weist die Elektronik 20 des Messsystems eine Zeitsteuereinheit auf. Diese Zeitsteuereinheit gibt dem Messsystem die Zeit vor und steuert zudem die zeitliche Abfolge der Elemente. Insbesondere gibt diese die Zeit für das Histogramm vor, steuert die Aktivierung und Deaktivierung der einzelnen Sensorelemente und Emitterelemente. Zudem ermöglicht die Zeitsteuereinheit die korrekte Addition der Histogramme. Ebenso gibt die Zeitsteuereinheit die Zeitpunkte für jeden Messzyklus vor, zu denen die einzelnen Elemente aktiviert und deaktiviert werden.

### Bezugszeichen

- 10: LIDAR Messsystem
- 12: LIDAR Sendeeinheit
- 14: LIDAR Empfangseinheit
- 16: Sendeoptik
- 18: Empfangsoptik
- 20: Elektronik
- 22: Sendechip
- 24: Emitterelement
- 26: Empfangschip
- 28: Sensorelement
- 30: Laserlicht / Laserpuls
- 32: Objekt
- 33: Peak
- 34: Verbindung
- 36: Makrozelle
- 38: TDC
- 40: x-Achse (Zeit)
- 42: Beginn Messzyklus
- 44: Ende Messzyklus
- 46: Aussenden Laserpuls
- 48: Detektion Nahbereich
- 50: Detektion Mittelbereich
- 52: Detektion Fernbereich
- 54: Histogramm
- 56: Bin
- 58: Detektion
- 60b,c,d: Linie, durchgezogen
- 62b,c,d: Linie, gestrichelt
- 64b,c,d: Linie, gepunktet
- 66: Zeitbereich
- 68: Zeitbereich
- α,β,γ: Sensorgruppe
- I,II,...: Spalte Sendechip
- i,ii,...: Spalte Empfangschip
- A,B,...: Reihe Sendechip
- a,b,...: Reihe Empfangschip
- tₛₜₐᵣₜ: Zeitpunkt
- t_{ende}: Zeitpunkt
- t₀: Zeitpunkt
- t₁: Zeitpunkt
- t₂: Zeitpunkt
- t_{2*}: Zeitpunkt
- t₃: Zeitpunkt
- t₄: Zeitpunkt
- t₅: Zeitpunkt
- t₆: Zeitpunkt
- t₇: Zeitpunkt
- t₈: Zeitpunkt
- tₐ: Zeitpunkt
- t_{b}: Zeitpunkt
- t_{c}: Zeitpunkt
- t_{d}: Zeitpunkt
- tₑ: Zeitpunkt
- t_{f}: Zeitpunkt
- t_{g}: Zeitpunkt
- tₕ: Zeitpunkt
- tᵢ: Zeitpunkt
- tₖ: Zeitpunkt
- tₗ: Zeitpunkt
- tₘ: Zeitpunkt
- tₙ: Zeitpunkt

## Patentansprüche

1. Verfahren zur Ansteuerung von Sensorelementen (28) eines LIDAR Messsystems (10),
- wobei Sensorelemente einer Makrozelle für verschiedene Messbereiche in Sensorgruppen unterteilt sind, sodass einem Messbereich eine Sensorgruppe zugordnet ist,
- wobei ein Sensorelement (28) während eines Messzyklus aktiviert und deaktiviert wird,
- wobei ein Messvorgang mehrere Messzyklen umfasst,
**dadurch gekennzeichnet, dass**
- bei einem ersten Messzyklus das Sensorelement (28) zu einem ersten Zeitpunkt *t_{d}* innerhalb des ersten Messzyklus aktiviert wird und bei einem zweiten Messzyklus dasselbe Sensorelement (28) zu einem zweiten Zeitpunkt *tₑ* innerhalb des zweiten Messzyklus aktiviert wird,
- wobei sich der erste Zeitpunkt *t_{d}* und der zweite Zeitpunkt *tₑ* auf einen Referenzzeitpunkt beziehen,
- wobei der Referenzzeitpunkt der jeweilige Zeitpunkt der Aussendung eines Lichtpulses mittels eines dem Sensorelement zugeordneten Emitterelementes ist,
- wobei sich der erste Zeitpunkt *t_{d}*und der zweite Zeitpunkt *tₑ* unterscheiden,
- wobei ein Messzyklus mindestens die Zeitdauer umfasst, die der Lichtpuls bis zu einem Objekt bei maximaler Messdistanz und zurück braucht,
- wobei bei einem Übergang von einem ersten Messbereich zu einem zweiten Messbereich die dem ersten Messbereich zugeordnete Sensorgruppe deaktiviert und die dem zweiten Messbereich zugeordnete Sensorgruppe aktiviert wird.

2. Verfahren nach Anspruch 1,
**dadurch gekennzeichnet, dass**
- bei einem ersten Messzyklus das Sensorelement (28) zu einem ersten Zeitpunkt *tₕ* innerhalb des ersten Messzyklus deaktiviert wird und bei einem zweiten Messzyklus dasselbe Sensorelement (28) zu einem zweiten Zeitpunkt *tᵢ* innerhalb des zweiten Messzyklus deaktiviert wird,
- wobei sich der erste Zeitpunkt und der zweite Zeitpunkt auf einen Referenzzeitpunkt beziehen,
- wobei der Referenzzeitpunkt der jeweilige Zeitpunkt der Aussendung eines Lichtpulses mittels eines dem Sensorelement zugeordneten Emitterelementes ist,
- wobei sich der erste Zeitpunkt *tₕ* und der zweite Zeitpunkt *tᵢ* unterscheiden.

3. Verfahren nach Anspruch 1 oder 2, **dadurch gekennzeichnet, dass** der erste Zeitpunkt vor oder nach dem zweiten Zeitpunkt liegt.

4. Verfahren nach einem der Ansprüche 1 bis 3, **dadurch gekennzeichnet, dass** der erste Zeitpunkt und der zweite Zeitpunkt innerhalb eines vorgegebenen Zeitbereichs (66, 68) liegen, und

5. Verfahren nach einem der Ansprüche 1 bis 4, **dadurch gekennzeichnet dass** der erste Zeitpunkt und der zweite Zeitpunkt aufeinanderfolgender Messzyklen zufällig gewählt sind.

6. Verfahren nach einem der Ansprüche 1 bis 5, **dadurch gekennzeichnet, dass** ein in einem Messzyklus ein Zeitpunkt, der bereits zum Aktivieren und / oder Deaktivieren eines Sensorelements verwendet wurde, für nachfolgende Messzyklen des Messvorgangs ausscheidet.

7. Verfahren nach einem der Ansprüche 1 bis 6, **dadurch gekennzeichnet, dass** sofern ein Deaktivieren eines Sensorelements (28) mit einem Aktivieren eines anderen Sensorelements (28) in Zusammenhang steht, der Zeitversatz zwischen dem Aktivieren und Deaktivieren der Sensorelemente (28) für alle Messzyklen des Messvorgangs identisch ist oder zufällig verteilt ist.

8. LIDAR Messsystem mit einer Sendeeinheit, einer Empfangseinheit und einer Steuereinheit zur zeitgesteuerten Aktivierung und Deaktivierung von Sensorelementen der Empfangseinheit, wobei die Steuereinheit eine Zeitsteuereinheit umfasst,
**dadurch gekennzeichnet, dass**
die Zeitsteuereinheit dazu ausgebildet ist ein Verfahren gemäß einem der Ansprüche 1 bis 7 durchzuführen.

## Claims

1. Method for controlling sensor elements (28) of a LIDAR measuring system (10),
- wherein sensor elements of a macrocell for different measuring ranges are subdivided into sensor groups, so that a sensor group is assigned to a measuring range
- wherein a sensor element (28) is activated and deactivated during a measuring cycle,
- wherein a measuring process comprises several measuring cycles,
**characterized in that**
- in a first measuring cycle, the sensor element (28) is activated at a first point in time *t_{d}* within the first measuring cycle, and in a second measuring cycle, the same sensor element (28) is activated at a second point in time *tₑ* within the second measuring cycle,
- wherein the first point in time *t_{d}* and the second point in time *tₑ* refer to a reference point in time,
- wherein the reference point in time is the respective point in time at which a light pulse is emitted by means of an emitter element assigned to the sensor element,
- wherein the first point in time *t_{d}* and the second point in time *tₑ* are different,
- wherein a measuring cycle comprises at least the duration of time that it takes for the light pulse to travel to an object at the maximum measuring distance and back,
- wherein during a transition from a first measuring range to a second measuring range, the sensor group assigned to the first measuring range is deactivated and the sensor group assigned to the second measuring range is activated.

2. Method according to claim 1,
**characterized in that**
- in a first measuring cycle, the sensor element (28) is deactivated at a first point in time *tₕ* within the first measuring cycle, and in a second measuring cycle, the same sensor element (28) is deactivated at a second point in time *tᵢ* within the second measuring cycle,
- wherein the first point in time and the second point in time refer to a reference point in time,
- wherein the reference point in time is the respective point in time at which a light pulse is emitted by means of an emitter element assigned to the sensor element
- wherein the first point in time *tₕ* and the second point in time *tᵢ* are different.

3. Method according to claim 1 or 2, **characterized in that** the first point in time is before or after the second point in time.

4. Method according to one of claims 1 to 3, **characterized in that**
the first point in time and the second point in time are within a predetermined time range (66, 68), and

5. Method according to one of claims 1 to 4, **characterized in that** the first point in time and the second point in time of successive measurement cycles are selected at random.

6. Method according to one of claims 1 to 5, **characterized in that** a point in time that has already been used in a measurement cycle to activate and/or deactivate a sensor element is excluded for subsequent measurement cycles of the measurement process.

7. Method according to one of claims 1 to 6, **characterized in that**, if a deactivation of a sensor element (28) is associated with an activation of another sensor element (28), the time offset between the activation and deactivation of the sensor elements (28) is identical or randomly distributed for all measurement cycles of the measurement process.

8. LIDAR measuring system with a transmitter unit, a receiver unit and a control unit for time-controlled activation and deactivation of sensor elements of the receiver unit, wherein the control unit comprises a time control unit,
**characterized in that**
the time control unit is configured to carry out a method according to one of claims 1 to 7.

## Revendications

1. Procédé de commande d'éléments de détection (28) d'un système de mesure LIDAR (10),
- des éléments de détection d'une macrocellule étant divisés en groupes de détection pour différentes plages de mesure, de sorte qu'un groupe de détection est attribué à une plage de mesure
- dans lequel un élément de détection (28) est activé et désactivé pendant un cycle de mesure,
- une opération de mesure comprenant plusieurs cycles de mesure,
**caractérisé en ce que**
- lors d'un premier cycle de mesure, l'élément de détection (28) est activé à un premier moment *t_{d}* à l'intérieur du premier cycle de mesure et lors d'un deuxième cycle de mesure, le même élément de détection (28) est activé à un deuxième moment *tₑ* à l'intérieur du deuxième cycle de mesure,
- le premier moment *t_{d}* et le deuxième moment *tₑ* se rapportant à un moment de référence,
- le moment de référence étant le moment respectif de l'émission d'une impulsion lumineuse au moyen d'un élément émetteur associé à l'élément de détection
- le premier moment *t_{d}* et le deuxième moment *tₑ* étant différents,
- un cycle de mesure comprenant au moins la durée nécessaire à l'impulsion lumineuse pour atteindre un objet à la distance de mesure maximale et inversement,
- le groupe de détection associé à la première plage de mesure étant désactivé et le groupe de détection associé à la deuxième plage de mesure étant activé lors d'un passage d'une première plage de mesure à une deuxième plage de mesure.

2. Procédé selon la revendication 1,
**caractérisé en ce que**
- lors d'un premier cycle de mesure, l'élément de détection (28) est désactivé à un premier moment *tₕ* à l'intérieur du premier cycle de mesure et lors d'un deuxième cycle de mesure, le même élément de détection (28) est désactivé à un deuxième moment *tᵢ* à l'intérieur du deuxième cycle de mesure,
- le premier moment et le deuxième moment se rapportant à un moment de référence,
- le moment de référence étant le moment respectif de l'émission d'une impulsion lumineuse au moyen d'un élément émetteur associé à l'élément de détection
- le premier moment *tₕ* et le deuxième moment *tᵢ* étant différents.

3. Procédé selon la revendication 1 ou 2, **caractérisé en ce que** le premier moment est antérieur ou postérieur au deuxième moment.

4. Procédé selon l'une quelconque des revendications 1 à 3, **caractérisé en ce que** le premier moment et le deuxième moment se situent à l'intérieur d'une plage de temps prédéterminée (66, 68), et

5. Procédé selon l'une des revendications 1 à 4, **caractérisé en ce que** le premier moment et le deuxième moment de cycles de mesure successifs sont choisis de manière aléatoire.

6. Procédé selon l'une des revendications 1 à 5, **caractérisé en ce que**, dans un cycle de mesure, un instant qui a déjà été utilisé pour activer et/ou désactiver un élément de détection est éliminé pour les cycles de mesure suivants du processus de mesure.

7. Procédé selon l'une quelconque des revendications 1 à 6, **caractérisé en ce que**, dans la mesure où une désactivation d'un élément de détection (28) est liée à une activation d'un autre élément de détection (28), le décalage temporel entre l'activation et la désactivation des éléments de détection (28) est identique ou réparti de manière aléatoire pour tous les cycles de mesure du processus de mesure.

8. Système de mesure LIDAR comprenant une unité d'émission, une unité de réception et une unité de commande pour l'activation et la désactivation commandées dans le temps d'éléments de détection de l'unité de réception, l'unité de commande comprenant une unité de commande temporelle,
**caractérisé en ce que**
l'unité de commande temporelle est adaptée pour exécuter un procédé selon l'une des revendications 1 à 7.
